# EUROPÄISCHE PATENTSCHRIFT

(11) **EP 2 468 628 B1**
(45) Veröffentlichungstag und Bekanntmachung des Hinweises auf die Patenterteilung: **20.07.2016**
(21) Anmeldenummer: 11009768.0
(22) Anmeldetag: 09.12.2011
(51) Int. Cl.: B64C 39/00

(54) **Hybridrotor**
Hybrid rotor
Rotor hybride

(30) Priorität: 22.12.2010 DE 102010055676
(43) Veröffentlichungstag der Anmeldung: 27.06.2012
(73) Patentinhaber: Airbus Defence and Space GmbH, 85521 Ottobrunn (DE)
(72) Erfinder: Seifert, Jost, Dr, 85077 Manching (DE)
(74) Vertreter: Kopf Westenberger Wachenhausen Patentanwälte PartG mbB

(56) Entgegenhaltungen:
- DE-B3-102007 009 951
- GB-A- 580 053
- GB-A- 2 346 348
- US-A- 5 875 627

## Beschreibung

Die vorliegende Erfindung betrifft einen Hybridrotor für ein Luftfahrzeug, ein Luftfahrzeug mit einem Hybridrotor, die Verwendung eines Hybridrotors in einem Luftfahrzeug und ein Verfahren zum Fliegen eines Luftfahrzeugs.

Ein Hybridrotor, auch als hybrider Rotor bezeichnet, stellt eine Kombination aus zwei unterschiedlichen Rotorentypen bzw. Rotorsystemen dar. Hybridrotoren werden bei Luftfahrzeugen, beispielsweise Flugzeugen, derart eingesetzt, dass den beiden Rotortypen bzw. Rotorsystemen unterschiedliche Aufgaben zukommen. Beispielsweise ist aus der DE 10 2007 009951 B3 ein Fluggerät bekannt, bei dem ein sich drehender Zylinder den Auftrieb liefert, während ein Zykloidalpropeller für Steuerbarkeit und Vortrieb verantwortlich ist. Der sich drehende Zylinder ist auch als Flettnerrotor bekannt; bei diesem wird ein rotierender Zylinder einer Anströmung ausgesetzt, wodurch eine Kraft erzeugt wird, die quer zur Anströmungsrichtung gerichtet ist. Diese erzeugte Kraft beruht auf dem Magnuseffekt und wird daher auch als Magnuskraft bezeichnet. Es hat sich jedoch gezeigt, dass die Ansteuerung der Propellerelemente des Zykloidalpropellers technisch aufwendig ist.

Es besteht daher ein Bedarf, einen Hybridrotor zur Verfügung zu stellen, der einfach konstruiert ist und damit auch leicht ist und kostengünstig herzustellen ist.

Dies wird durch einen Hybridrotor, ein Luftfahrzeug, die Verwendung eines Hybridrotors in einem Luftfahrzeug sowie durch ein Verfahren nach einem der unabhängigen Ansprüche erreicht. Beispielhafte Ausführungsformen sind in den abhängigen Ansprüchen dargestellt.

Gemäß einer beispielhaften Ausführungsform der Erfindung ist ein Hybridrotor für ein Luftfahrzeug vorgesehen, der einen Magnus-Rotor, einen Querstromrotor und eine Leitvorrichtung aufweist. Der Magnus-Rotor ist durch eine erste Antriebsvorrichtung um eine Magnus-Rotorachse drehend antreibbar und weist eine geschlossene Mantelfläche auf. Der Querstromrotor ist um eine Drehachse drehend gehalten und weist eine Vielzahl von axial verlaufenden Rotorblättern auf, die durch eine zweite Antriebsvorrichtung um die Drehachse drehend antreibbar sind und die auf die tangentiale Winkellage bezogen feststehend ausgebildet sind. Der Magnus-Rotor ist innerhalb des Querstromrotors angeordnet und die Magnus-Rotorachse verläuft in Richtung der Drehachse. Die Leitvorrichtung weist ein Gehäusesegment auf, das den Querstromrotor in Umfangsrichtung teilweise umgibt, wobei das Gehäusesegment einen Verstellmechanismus aufweist und wenigstens mit Bezug zur Magnus-Rotorachse verschwenkbar ausgebildet ist. Das Gehäusesegment ist derart ausrichtbar, dass der Querstromrotor eine Vortriebskraft erzeugt und eine Queranströmung an dem Magnus-Rotorderart bewirkt, dass eine Kraft nach dem Magnuseffekt erzeugt wird, die als Auftriebskraft wirkt.

Dadurch ist es möglich, die beiden für ein Luftfahrzeug erforderlichen Kräfte, d.h. die Vortriebskraft und die Auftriebskraft, durch den Hybridrotor zu erzeugen. Der Querstromrotor ist dabei aufgrund seiner feststehenden Rotorblätter, die ihre tangentiale Winkellage während der Rotation des Querstromrotors nicht verändern, die sich also in der stets gleichen Ausrichtung zum Drehmittelpunkt des Rotors um diesen auf einer Kreisbahn bewegen, möglichst einfach konstruiert, d.h., der Querstromrotor ist einfach zu konstruieren und trägt zu einer Gewichtsminimierung des Rotors bei. In Kombination mit der Leitvorrichtung erhält der Querstromrotor neben der Funktion der Erzeugung der Vortriebskraft noch eine zweite Funktion, nämlich eine Queranströmung an dem Magnus-Rotor zu bewirken, um sozusagen als Schuberzeuger mit dem sich rotierenden Magnus-Rotor eine möglichst große Auftriebskraft zur Verfügung zu stellen. Durch die Verstellbarkeit des Gehäusesegments der Leitvorrichtung wird damit ein Hybridrotor zur Verfügung gestellt, der regelbare Auftriebs- und Vortriebskräfte erzeugt und sich daher für ein Luftfahrzeug eignet.

Im Gegensatz zu senkrechtstartfähigen Flugzeugen nach dem Stand der Technik, beispielsweise sogenannte Schwenkrotorkonfigurationen, wie zum Beispiel die V-22 Osprey, bietet das erfindungsgemäße Luftfahrzeug eine einfachere mechanische Lösung und eine größere Flugsicherheit, insbesondere bei der Transitionsphase zwischen Reiseflug und Start oder Landung.

Gemäß der Erfindung ist der Magnus-Rotor ein rotationssymmetrischer Hohlkörper, der durch den Magnus-Effekt eine Umlenkung einer Luftströmung bewirkt.

Gemäß dieser Erfindung bewirkt der Querstromrotor eine Zirkulationsströmung. Diese ist eine rotatorische Luftströmung, die gleichzeitig mit einer translatorischen Luftströmung überlagert wird, die ebenfalls durch den Querstromrotor hervorgerufen wird oder auch durch eine Bewegung des Luftfahrzeugs in der Luft während eines Flugvorgangs.

Eine rotatorische Luftströmung und eine translatorische Luftströmung bilden eine Kombinationsströmung, die an einem der Kombinationsströmung ausgesetzten geometrischen Körper den Magnuseffekt bewirkt. Der Körper wird daher auch als Magnuskörper oder Magnus-Rotor bezeichnet.

Bei der Kombinationsströmung kann die rotatorische Luftströmung auch zusätzlich dadurch erzeugt bzw. unterstützt werden, dass der Magnus-Rotor drehend angetrieben wird. Die Rotation des Magnuskörper, bzw. Magnus-Rotors kann zu einer stärkeren Ausprägung des Magnuseffekts führen.

Ausschlaggebend für den Magnuseffekt ist die Relativbewegung zwischen der Oberfläche des Magnus-Rotors und der Kombinationsströmung mit der erwähnten Querum- bzw. Queranströmung und der Zirkulationsströmung.

Es sei ausdrücklich darauf hingewiesen, dass z.B. ein feststehender Magnus-Rotor bzw. Magnuskörper, beispielsweise ein feststehender Zylinder aufgrund des sich drehenden Querstromrotors und der Kombinationsströmung bereits einen Magnuseffekt hervorrufen kann.

Beispielswiese ist der Magnus-Rotor mit einem über die Rotationsachse gleichbleibenden kreisförmigen Querschnitt (Durchmesser) ausgebildet, der Magnus-Rotor ist also ein Zylinder oder Zylinderkörper im geometrischen Sinne.

Beispielswiese ist der Magnus-Rotor mit einem sich über die Rotationsachse gleichmäßig verändernden (kreisförmigen) Durchmesser ausgebildet, d.h. z.B. einem Kegelstumpf.

Beispielswiese ist der Magnus-Rotor mit einem über die Rotationsachse parabelförmig zu- und wieder abnehmendem (kreisförmigen) Durchmesser ausgebildet, z.B. in Form einer Kugel.

Beispielswiese kann der Magnus-Rotor auch aus unterschiedlichen Kegelstumpfsegmenten und/oder Zylindersegmenten zusammengesetzt sein.

Gemäß einem weiteren Aspekt der Erfindung verläuft die Magnus-Rotorachse parallel zur Drehachse des Querstromrotors.

Gemäß einem weiteren Aspekt der Erfindung ist der Magnus-Rotor konzentrisch mit dem Querstromrotor angeordnet.

Gemäß einem weiteren Aspekt der Erfindung verläuft die Magnus-Rotorachse geneigt zur Drehachse des Querstromrotors, wobei die Magnus-Rotorachse z.B. eine Ebene mit der Drehachse aufspannt.

Gemäß einem weiteren Aspekt der Erfindung weist der Hybridrotor eine Rotorachse auf, wobei die Magnus-Rotorachse des Magnus-Rotors die Rotorachse bildet.

Gemäß einem weiteren Aspekt der Erfindung drehen sich der Magnus-Rotor, z.B. ein Zylinder, und der Querstromrotor um die Rotorachse. Der Begriff Rotorachse wird in diesem Zusammenhang im geometrischen Sinn verwendet.

Gemäß einem weiteren Aspekt der Erfindung wird der Magnus-Rotor über eine erste Welle angetrieben und der Querstromrotor über eine zweite Welle, wobei die erste und die zweite Welle beispielsweise konzentrisch angeordnet sind, zum Beispiel ineinander liegend.

Gemäß einem weiteren Aspekt der Erfindung ist der Magnus-Rotor in der Drehrichtung des Querstromrotors antreibbar.

Gemäß einem weiteren Aspekt ist der Magnus-Rotor entgegen der Drehrichtung des Querstromrotors antreibbar, z.B. um einen gezielten Abtrieb zu erzeugen.

Gemäß einem weiteren Aspekt sind der Querstromrotor und der Magnus-Rotor auch in entgegengesetzter Richtung antreibbar, z.B. für Bremszwecke.

Gemäß einem weiteren Aspekt der Erfindung ist die Kraft nach dem Magnuseffekt, auch Magnuskraft genannt, die an dem Magnus-Rotor erzeugt wird, eine Auftriebskraft und/oder eine Vortriebskraft.

Gemäß einem weiteren Aspekt der Erfindung erzeugt der Querstromrotor eine Strömung, die quer zur Magnus-Rotorachse verläuft.

Gemäß einem weiteren Aspekt der Erfindung bildet der Querstromrotor zusammen mit der Leitvorrichtung ein Querstromgebläse.

Gemäß einem weiteren Aspekt der Erfindung dient das Querstromgebläse als Schuberzeuger.

Gemäß einer beispielhaften Ausführungsform der Erfindung weist das Gehäusesegment auf der dem Querstromrotor zugewandten Seite eine Kreisbogenform auf.

Gemäß einem weiteren Aspekt der Erfindung ist das Gehäusesegment auf der gesamten Länge des Magnus-Rotors mit der gleichen Querschnittsform ausgebildet.

Gemäß einem alternativen Aspekt der Erfindung weist das Gehäusesegment über die Länge des Magnus-Rotors unterschiedliche Querschnittsformen auf. Dadurch ist es beispielsweise möglich, zusätzliche aerodynamische Eigenschaften des Querstromrotors zur Verfügung zu stellen, in Abhängigkeit von der jeweiligen Lage, bezogen auf ein Luftfahrzeug.

Gemäß einem weiteren Aspekt der Erfindung weist das Gehäusesegment im Querschnitt, d.h. quer zur Magnus-Rotorachse betrachtet, eine Kreisbogensegmentform auf.

Gemäß einem weiteren Aspekt der Erfindung weist das Gehäusesegment auf der dem Querstromrotor abgewandten Seite verstellbare Profilelemente auf, mittels derer die Querschnittsform auf der abgewandten Seite veränderbar ist, zur Verbesserung der aerodynamischen Eigenschaften. Beispielsweise erfolgt die Veränderung in Abhängigkeit der Verschwenkstellung.

Gemäß einem weiteren Aspekt der Erfindung ist zwischen der Mantelfläche des Magnus-Rotors und den rotierenden Rotorblättern in radialer Richtung ein Abstand vorgesehen, der vom Durchmesser des Magnus-Rotors abhängig ist.

Beispielsweise ist der Durchmesser des Magnus-Rotors genauso groß bis doppelt so groß wie der Abstand der Mantelfläche zu den Rotorblättern.

Gemäß einem weiteren Beispiel beträgt das Verhältnis von Durchmesser des Magnus-Rotors und Abstand zu den Rotorblättern 2 : 1.

Gemäß einem Aspekt der Erfindung können die Profiltiefe und der Anstellwinkel der Rotorblätter frei gewählt werden, wobei diese beiden Parameter bezogen auf die Wirkung in Beziehung zueinander stehen. Außerdem kann der Durchmesser des Querstromrotors festgelegt werden. Die Anzahl der Rotorblätter wiederum steht im Zusammenhang mit dem Durchmesser des Querstromrotors und der Profiltiefe. Sind diese Größen festgelegt, ist auch der lichte Durchmesser des Querstromrotors bekannt, also der Abstand der Rotorblätter vom Mittelpunkt. Der Durchmesser des Magnus-Rotor, z.B. eines Zylinders, ergibt sich dann aus dem oben genannten Verhältnis von Abstand zwischen den Rotorblättern und der Mantelfläche des Magnus-Rotors zum Durchmesser des Magnus-Rotors.

Gemäß einer beispielhaften Ausführungsform der Erfindung weisen die Rotorblätter im Querschnitt jeweils eine gebogene Form auf mit einer konkaven und einer konvexen Seite, wobei die konkave Seite dem Magnus-Rotor zugewandt ist.

Gemäß einem weiteren Aspekt der Erfindung sind mindestens zwei, vorzugsweise 16 Rotorblätter vorgesehen.

Gemäß einer beispielhaften Ausführungsform der Erfindung weisen die Rotorblätter im Querschnitt jeweils einen Winkel von 15° bis 70° zur Radialrichtung auf.

Gemäß einem weiteren Aspekt der Erfindung weisen die Rotorblätter im Querschnitt jeweils einen Winkel von 30° zur Radialrichtung auf.

Der Begriff Radialrichtung bezieht sich auf eine Verbindungslinie zwischen der Magnus-Rotorachse und der Mitte des Querschnitts des Rotorblatts, und die Richtung im Querschnitt bezieht sich bei einer gebogenen Querschnittsform auf die Tangentialrichtung.

Wie bereits erwähnt, verändern die Rotorblätter ihren Winkel während der Rotation des Querstromrotors nicht.

Gemäß einem weiteren Aspekt der Erfindung verlaufen die Rotorblätter in axialer Richtung parallel zur Drehachse, d.h. sie weisen einen konstanten Abstand zur Drehachse auf.

Gemäß einem weiteren Aspekt der Erfindung verlaufen die Rotorblätter in axialer Richtung geneigt zur Drehachse, wobei die Rotorblätter einen zu- oder abnehmenden Abstand zur Drehachse aufweisen, d.h. die Rotorblätter verlaufen jeweils in einer Ebene mit der Drehachse, jedoch geneigt zur Drehachse.

Gemäß einer beispielhaften Ausführungsform der Erfindung ist der Magnus-Rotor ein Zylinder und weist im Bereich seiner Enden jeweils eine über die Zylinderfläche hinaus stehende Endscheibe auf. Der Begriff Zylinderfläche bezieht sich auf die Mantel- oder Umfangsfläche des Zylinders.

Gemäß einem weiteren Aspekt der Erfindung sind die Scheiben an den stirnseitigen Enden des Zylinders ausgebildet.

Gemäß einem weiteren Aspekt der Erfindung drehen sich die Endscheiben mit dem Zylinder; beispielsweise sind die Scheiben direkt an dem Zylinder befestigt.

Gemäß einer beispielhaften Ausführungsform der Erfindung weist der Zylinder eine Vielzahl von Scheiben auf, die zwischen den Endscheiben angeordnet sind, wobei die Scheiben einen größeren Durchmesser aufweisen als die Mantelfläche. Gemäß einem weiteren Aspekt, sind die erwähnten Scheiben bei einem Magnus-Rotor vorgesehen, der eine andere rotationssymmetrische Form aufweist.

Gemäß der Erfindung ist auch ein Luftfahrzeug vorgesehen, das einen Rumpfbereich aufweist und wenigstens einen Hybridrotor nach einem der oberhalb beschriebenen Ausführungsbeispiele und Aspekte. Dabei sind der Magnus-Rotor und der Querstromrotor des wenigstens einen Hybridrotors an dem Rumpfbereich gehalten. Außerdem sind eine erste Antriebsvorrichtung zum Drehen des Magnus-Rotors des wenigstens einen Hybridrotors und eine zweite Antriebsvorrichtung zum Drehen des Querstromrotors des wenigstens einen Hybridrotors vorgesehen. Die Magnus-Rotorachse ist quer zur Flugrichtung angeordnet, z.B. in einem Winkel zwischen ca. 30° und 150°, vorzugsweise 45° bis 135°, weiter vorzugsweise 80° bis 100°, z.B. 90°.

Dadurch ist es möglich, ein Luftfahrzeug zur Verfügung zu stellen, bei dem der Hybridrotor die Funktion des Vortriebs und die Funktion des Auftriebs übernimmt. Mit anderen Worten, im Vergleich zu einem konventionellen Flugzeug mit einer Tragfläche und beispielsweise einem Propellerantrieb übernimmt der Hybridrotor die Funktion des Propellers für den Vortrieb und die Funktion der Tragflächen für den Auftrieb.

Gemäß einem weiteren Aspekt sind zusätzliche Tragflächen vorhanden.

Gemäß einem weiteren Aspekt der Erfindung sind zur Steuerung des Luftfahrzeugs Höhen- und Seitenleitwerk vorgesehen, beispielsweise im hinteren Bereich des Rumpfbereichs.

Gemäß einem weiteren Ausführungsbeispiel der Erfindung weist das Luftfahrzeug eine Längsachse auf, und beidseitig der Längsachse ist jeweils wenigstens ein Hybridrotor nach einem der vorhergehenden Ausführungsbeispiele und Aspekte vorgesehen.

Gemäß einem weiteren Aspekt der Erfindung sind wenigstens zwei Hybridrotoren vorgesehen, die auf gegenüberliegenden Seiten der Längsachse angeordnet sind, wobei die wenigstens zwei Hybridrotoren voneinander beabstandet sind und ein Antriebspaar bzw. eine Antriebsgruppe bilden.

Gemäß einem weiteren Aspekt der Erfindung sind zur Steuerung des Luftfahrzeugs unterschiedliche Drehzahlen pro Hybridrotor vorgesehen, d.h. durch die unterschiedliche Ansteuerung der Hybridrotoren können auf den beiden Seiten der Längsachse unterschiedliche Auftriebs- und Vortriebskräfte erzeugt werden.

Gemäß einem weiteren Ausführungsbeispiel der Erfindung sind wenigstens zwei in Längsrichtung beabstandete Hybridrotoren nach einem der vorhergehenden Ausführungsbeispiele und Aspekte vorgesehen.

Gemäß einem weiteren Aspekt der Erfindung sind in Längsrichtung wenigstens zwei Antriebspaare bzw. zwei Antriebsgruppen vorgesehen.

Die Erfindung umfasst auch die Verwendung eines Hybridrotors nach einem der vorhergehend beschriebenen Ausführungsbeispiele und Aspekte in einem Luftfahrzeug.

Gemäß einem weiteren Aspekt der Erfindung ist auch die Verwendung eines Luftfahrzeugs mit einem Hybridrotor nach einem der vorhergehend genannten Ausführungsbeispiele und Aspekte vorgesehen.

Gemäß einem weiteren Ausführungsbeispiel der Erfindung ist ein Verfahren zum Fliegen eines Luftfahrzeugs vorgesehen, das die folgenden Schritte umfasst:
a) Rotieren eines Magnus-Rotors um eine Magnus-Rotorachse, wobei der Magnus-Rotor eine geschlossene Mantelfläche aufweist zur Erzeugung einer Kraft nach dem Magnuseffekt;
b) Rotieren eines Querstromrotors um eine Drehachse, der eine Vielzahl von axial verlaufenden Rotorblättern aufweist, die auf die tangentiale Winkellage bezogen feststehend ausgebildet sind, wobei das Rotieren des Querstromrotors für das Luftfahrzeug eine Vortriebskraft erzeugt, die quer zur Magnus-Rotorachse verläuft; wobei der Magnus-Rotor innerhalb des Querstromrotors angeordnet ist und die Drehachse in Richtung der Magnus-Rotorachse verläuft; und
c) Ausrichten eines Gehäusesegments einer Leitvorrichtung, das den Querstromrotor in Umfangsrichtung teilweise umgibt, durch Verschwenken des Gehäusesegments mit Bezug zur Magnus-Rotorachse derart, dass durch den Querstromrotor an dem Magnus-Rotor eine Queranströmung bewirkt wird, mittels der die Kraft nach dem Magnuseffekt erzeugt wird.

Gemäß einem weiteren Aspekt der Erfindung wird mit dem Rotieren des Magnus-Rotors eine Auftriebskraft erzeugt.

Gemäß einem weiteren Aspekt der Erfindung wird mit dem Rotieren des Magnus-Rotors auch eine Vortriebskraft erzeugt, welche die durch den Querstromrotor erzeugte Vortriebskraft unterstützt.

Gemäß einem weiteren Aspekt der Erfindung wird durch die beiden Rotortypen eine Kraft erzeugt, die einen Auftriebsvektor und einen Vortriebsvektor aufweist.

Gemäß einem weiteren Aspekt der Erfindung ist die Queranströmung des Magnus-Rotors derart vorgesehen, dass eine Kraft nach dem Magnuseffekt erzeugt, die an dem Luftfahrzeug wirkt.

Gemäß einem weiteren Aspekt der Erfindung ist die Kraft nach dem Magnuseffekt eine Vortriebskraft und/eine Auftriebskraft, wie bereits oberhalb erwähnt.

Gemäß einem weiteren Ausführungsbeispiel der Erfindung sind das Rotieren des Magnus-Rotors und das Rotieren des Querstromrotors sowie das Verschwenken der Leitvorrichtung derart separat regelbar, dass unterschiedliche Antriebs- und Vortriebskräfte einstellbar sind.

Das Konzept zur Steuerung umfasst dabei beispielsweise folgende Aspekte:
1. Die Drehzahl des Querstromrotors beeinflusst die Geschwindigkeit der durchströmten Luft und somit den Schub.
2. Die Drehzahl des Magnus-Rotors beeinflusst die Umlenkung der angeströmten Luft und somit durch den Magnuseffekt auch die Auftriebskraft.
3. Das verschwenkbare Leitblech beeinflusst die Richtung der den Hybridrotor um- und durchströmenden Luft und somit die Richtung der Gesamtkraft (aus Vortrieb und Auftrieb)

Die genannten Regelungsmöglichkeiten ermöglichen folglich Drehzahländerungen, welche die Größe der Kräfte beeinflussen. Das Verstellen des Leitblechs beeinflusst die Richtung der Kräfte.

Gemäß einem weiteren Aspekt der Erfindung sind unterschiedliche Flugrichtungen einstellbar.

Gemäß einem weiteren Aspekt der Erfindung wird die Leitvorrichtung derart eingestellt, dass eine vertikale Auftriebs- und Vortriebskraft erzeugt wird, die ein Senkrechtstarten des Luftfahrzeugs ermöglicht oder ein Kurzstarten, d.h. ein Starten mit extrem geringer Startstrecke.

Es sei darauf hingewiesen, dass die Merkmale der Ausführungsbeispiele und Aspekte der Vorrichtungen auch für Ausführungsformen des Verfahrens sowie Verwendung der Vorrichtung gelten und umgekehrt. Außerdem können auch diejenigen Merkmale frei miteinander kombiniert werden, bei denen dies nicht explizit erwähnt ist.

Nachfolgend wird anhand der beigefügten Zeichnungen näher auf ein Ausführungsbeispiel der Erfindung eingegangen. Es zeigen:
- **Fig. 1**: ein Luftfahrzeug mit einem Hybridrotor gemäß einem Ausführungsbeispiel der Erfindung;
- **Fig. 2**: einen Hybridrotor gemäß der Erfindung in einem schematischen Querschnitt;
- **Fig. 3**: einen Ausschnitt des Hybridrotors aus Fig. 2;
- **Fig. 4**: eine weitere Ausführungsform eines Luftfahrzeugs mit einem Hybridrotor gemäß der Erfindung;
- **Fig. 5**: weitere Ausführungsformen des Hybridrotors gemäß der Erfindung;
- **Fig. 6**: eine weitere Ausführungsform eines Luftfahrzeugs mit einem Hybridrotor gemäß der Erfindung;
- **Fig. 7**: eine weitere Ausführungsform eines Luftfahrzeugs mit einem Hybridrotor gemäß der Erfindung;
- **Fig. 8**: eine weitere Ausführungsform eines Luftfahrzeugs mit einem Hybridrotor gemäß der Erfindung;
- **Fig. 9**: eine weitere Ausführungsform eines Hybridrotors gemäß der Erfindung in einer Schnittansicht;
- **Fig. 10**: eine weitere Ausführungsform eines Hybridrotors gemäß der Erfindung; und
- **Fig. 11**: ein Verfahren zum Fliegen eines Luftfahrzeugs mit einem Hybridrotor gemäß einem Ausführungsbeispiel der Erfindung.

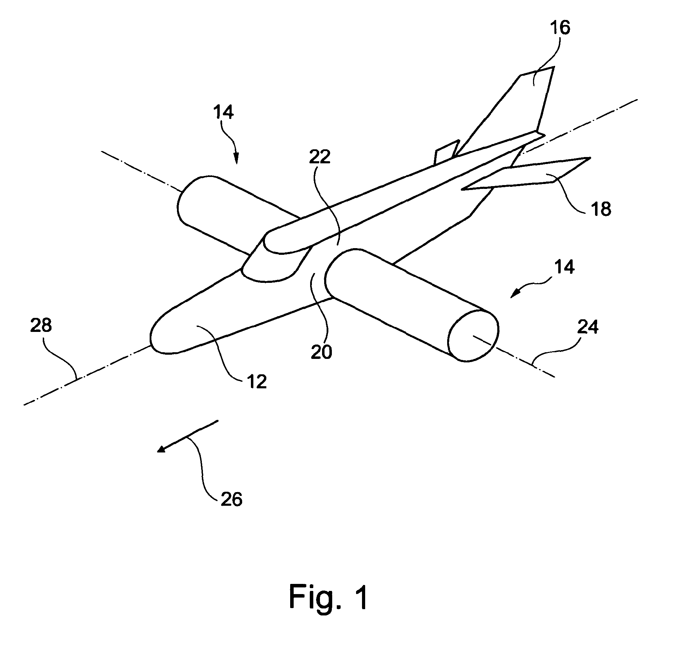

In Fig. 1 ist ein Luftfahrzeug 10 in einer Schrägansicht gezeigt. Das Luftfahrzeug 10 weist einen Rumpfbereich 12 auf und wenigstens einen Hybridrotor 14. Beispielsweise sind zwei Hybridrotoren vorgesehen, von denen jeweils einer auf einer Seite des Rumpfbereichs angeordnet ist. Das Luftfahrzeug 10 weist ferner ein Seitenleitwerk 16 sowie ein Höhenleitwerk 18 im hinteren Bereich des Rumpfbereichs auf.

Das in Fig. 1 gezeigte Luftfahrzeug 10 ist beispielsweise als Flugzeug ausgebildet, wobei neben kleineren Passagiermaschinen auch Großraumflugzeuge für Passagiere sowie auch Transportflugzeuge und andere Flugzeugarten vorgesehen sind.

Gemäß einem weiteren Aspekt der Erfindung, der jedoch nicht näher dargestellt ist, kann es sich bei dem Luftfahrzeug auch um einen anderen Fahrzeugtyp handeln, beispielsweise ein Luftschiff.

Mit Bezug auf Fig. 1 weist der Hybridrotor 14 einen Magnus-Rotor, einen Querstromrotor und eine Leitvorrichtung auf, die hier jedoch nicht näher mit Bezugszeichen versehen sind, sondern in den folgenden Figuren näher erläutert werden.

Der Magnus-Rotor und der Querstromrotor des wenigstens einen Hybridrotors sind an dem Rumpfbereich gehalten. Das Luftfahrzeug 10 weist außerdem eine erste Antriebsvorrichtung 20 zum Drehen des Magnus-Rotors des wenigstens einen Hybridrotors und eine zweite Antriebsvorrichtung 22 zum Drehen des Querstromrotors des wenigstens einen Hybridrotors auf. Die Magnus-Rotorachse, in Fig. 1 mit Bezugszeichen 24 versehen, ist quer zur Flugrichtung angeordnet, die in Fig. 1 mit einem Pfeil 26 angedeutet ist.

Gemäß einem weiteren Aspekt der Erfindung, der ebenfalls in Fig. 1 gezeigt ist, weist das Luftfahrzeug 10 eine Längsachse 28 auf, und beidseitig der Längsachse 28 ist jeweils wenigstens ein Hybridrotor 14 vorgesehen.

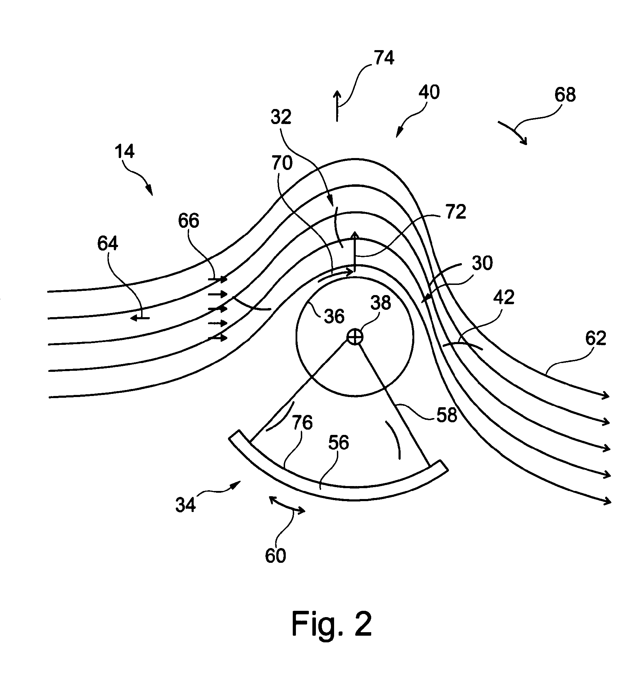

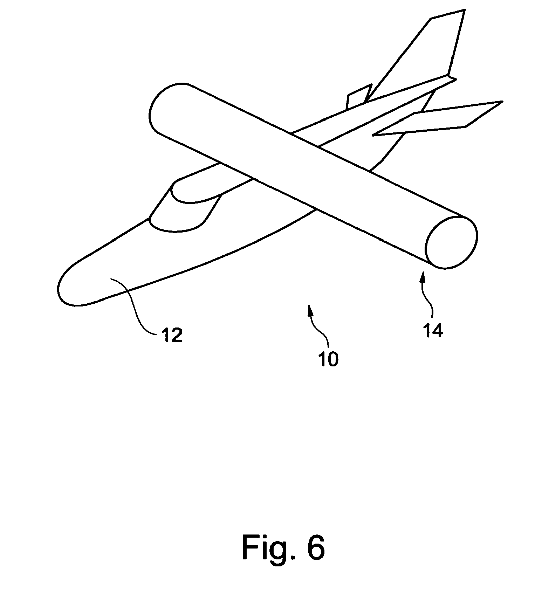

Bevor in den Figuren 6, 7 und 8 auf weitere Ausführungsbeispiele bezüglich der Anordnung und Anzahl von Hybridrotoren eingegangen wird, soll der Hybridrotor 14 anhand der Figuren 2 ff. näher erläutert werden.

In Fig. 2 ist der Hybridrotor 14 in einer schematischen Schnittansicht gezeigt. Der Hybridrotor 14 für ein Luftfahrzeug weist einen Magnus-Rotor 30, einen Querstromrotor 32 und eine Leitvorrichtung 34 auf.

Der Magnus-Rotor 30 ist durch eine Antriebsvorrichtung um seine Magnus-Rotorachse drehend antreibbar und weist eine geschlossene Mantelfläche 36 auf. Die Magnus-Rotorachse ist mit Bezugsziffer 38 gekennzeichnet.

Es sei darauf hingewiesen, dass der Hybridrotor 14 den Magnus-Rotor 30, den Querstromrotor 32 und die Leitvorrichtung 34 umfasst. Die ersten und zweiten Antriebsvorrichtungen 20, 22 sind zwar im Zusammenhang erwähnt, in der beschriebenen Ausführungsform jedoch nicht unmittelbarer Bestandteil des erfindungsgemäßen Hybridrotors 14.

Gemäß einem weiteren Aspekt umfasst der Hybridrotor 14 neben dem Magnus-Rotor 30 und dem Querstromrotor 32 sowie der Leitvorrichtung 34 auch die erste Antriebsvorrichtung 20 und die zweite Antriebsvorrichtung 22.

Beispielsweise kann der Magnus-Rotor 30 durch die erste Antriebsvorrichtung 20, die in Fig. 1 erwähnt ist, dort jedoch nicht näher dargestellt ist, angetrieben werden.

Der Querstromrotor 32 ist um eine Drehachse drehend gehalten und weist eine Vielzahl 40 von axial verlaufenden Rotorblättern 42 auf, die durch eine Antriebsvorrichtung um die Drehachse drehend angetrieben werden können. Beispielsweise können die Rotorblätter 42 durch die zweite Antriebsvorrichtung 22, die im Zusammenhang mit Fig. 1 erwähnt worden ist, angetrieben werden.

Der Magnus-Rotor 30 ist innerhalb des Querstromrotors 32 angeordnet und die Magnus-Rotorachse 38 verläuft in Richtung der Drehachse.

Beispielsweise verläuft die Magnus-Rotorachse 38 parallel zur Drehachse.

Gemäß einem Aspekt der Erfindung ist der Magnus-Rotor 30 konzentrisch mit dem Querstromrotor 32 angeordnet.

Gemäß einem nicht gezeigten Ausführungsbeispiel ist der Magnus-Rotor 30 innerhalb des Querstromrotors 32 angeordnet, wobei die jeweiligen Rotationsachsen versetzt zueinander sind. Dabei können die Rotationsachsen einen Winkel zueinander aufweisen und z.B. in einer Ebene liegen.

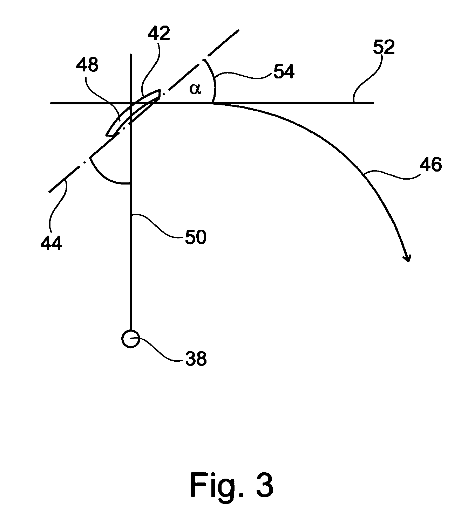

Die Rotorblätter 42 sind in Bezug auf die tangentiale Winkellage feststehend ausgebildet. Unter tangentialer Winkellage wird derjenige Winkel verstanden, den die Rotorblätter jeweils zur Tangentialen einnehmen. Wie in Fig. 3 gezeigt, weist das Rotorblatt 42 eine Verbindungslinie 44 zwischen den beiden äußeren Punkten des beispielsweise gekrümmt ausgebildeten Rotorblatts 42 auf. Bei der Rotation des Querstromrotors führt das Rotorblatt 42 eine Bewegung entlang einer Kreisbahn 46 um die Magnus-Rotorachse als Mittelpunkt bzw. Rotationsachse aus. Die Rotationsachse bzw. die Magnus-Rotorachse 38 lässt sich mit einem gedachten Mittelpunkt 48 des Rotorblatts 42 verbinden, was durch eine radial verlaufende Verbindungslinie 50 gezeigt ist. Senkrecht zu dieser Verbindungslinie 50 ist eine Tangentiale 52 dargestellt. Das Rotorblatt 42 weist mit seiner Ausrichtung, die durch die Linie 44 angedeutet ist, eine Winkellage 54 auf, die in Fig. 3 zusätzlich mit dem Symbol α gekennzeichnet ist.

Es sei darauf hingewiesen, dass die Richtungsgerade 44 zwar nicht durch den gedachten Mittelpunkt des Rotorblatts verläuft, so dass die Richtungsgerade 44 die Tangentiale 52 auch nicht im Mittelpunkt 48 des Rotorblatts schneidet, jedoch würde eine parallel zur Richtungsgerade 44 verlaufende Linie den gleichen Winkel 54 zur Tangentialen 52 einnehmen.

Gemäß dem gezeigten Ausführungsbeispiel verlaufen die Rotorblätter 42 in axialer Richtung parallel zur Drehachse, d.h. sie weisen einen konstanten Abstand zur Drehachse auf.

Gemäß einem weiteren, nicht näher gezeigten Aspekt der Erfindung verlaufen die Rotorblätter 42 in axialer Richtung geneigt zur Drehachse, wobei die Rotorblätter einen zu- oder abnehmenden Abstand zur Drehachse aufweisen, d.h. die Rotorblätter verlaufen jeweils in einer Ebene mit der Drehachse, jedoch geneigt zur Drehachse.

Die in Fig. 2 gezeigte Leitvorrichtung 34 weist ein Gehäusesegment 56 auf, das den Querstromrotor in Umfangsrichtung teilweise umgibt. Das Gehäusesegment 56 weist einen Verstellmechanismus 58 auf, mit dem das Gehäusesegment 56 wenigstens mit Bezug zur Magnus-Rotorachse 38 schwenkbar ausgebildet ist, was mit einem Doppelpfeilsymbol 60 angedeutet ist.

Gemäß einem weiteren Aspekt der Erfindung weist der Verstellmechanismus einen oder mehrere Aktuatoren auf oder einen anderen Antrieb, um das Verschwenken vorzunehmen bzw. die Arretierung in der jeweils erreichten Position zu gewährleisten, was jedoch nicht näher gezeigt ist.

Wie in Fig. 2 durch symbolische Strömungspfeile 62 angedeutet ist, lässt sich das Gehäusesegment 56 derart ausrichten, dass der Querstromrotor 32 eine Vortriebskraft 64, die symbolhaft mit einem Pfeil dargestellt ist, und gleichzeitig eine Queranströmung an dem Magnus-Rotor bewirkt, was mit Pfeilsymbolen 66 angedeutet ist.

Wie in Fig. 2 durch einen Rotationspfeil 68 angedeutet, erfolgt die Rotation des Querstromrotors im Uhrzeigersinn, was sich im Übrigen auch bereits durch die Stellung der Rotorblätter ergibt.

Weiter ist mit einem Magnus-Rotorrotationspfeil 70 angedeutet, dass sich in dem gezeigten Ausführungsbeispiel der Magnus-Rotor ebenfalls in Uhrzeigerrichtung dreht.

Durch die Queranströmung 66 und die Rotation 70 des Magnus-Rotors wird eine Kraft 72 nach dem Magnuseffekt erzeugt. Die Kraft 72 bewirkt eine Auftriebskraft 74 des Hybridrotors in Ergänzung zur Vortriebskraft 64.

Wie nicht näher gezeigt ist, wird der Magnus-Rotor durch eine erste Welle angetrieben und der Querstromrotor durch eine zweite Welle, die beispielsweise konzentrisch angeordnet sind, zum Beispiel ineinander verlaufend.

Der Querstromrotor 32 bildet zusammen mit der Leitvorrichtung 34 ein Querstromgebläse, das eine Strömung erzeugt, die quer zur Magnus-Rotorachse 38 verläuft.

Wie in Fig. 2 außerdem zu erkennen ist, weist das Gehäusesegment eine dem Querstromrotor zugewandte Seite 76 auf. Diese dem Querstromrotor zugewandte Seite 76 weist eine Kreisbogenform auf, die im Zusammenhang mit den umlaufenden Rotorblättern 42 steht.

Gemäß einer Ausführungsform ist das Gehäusesegment 56 auf die gesamte Länge des Magnus-Rotors mit dem gleichen Querschnitt ausgebildet. Alternativ dazu ist auch vorgesehen, dass das Gehäusesegment über die Länge des Magnus-Rotors unterschiedliche Querschnittsformen aufweisen kann, was jedoch nicht näher gezeigt ist.

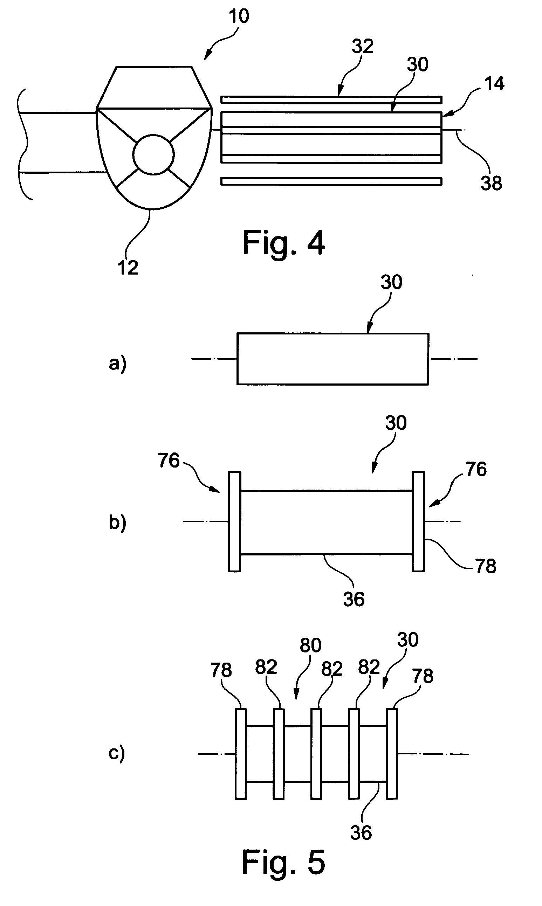

In Fig. 4 ist ein weiteres Ausführungsbeispiel gezeigt, bei dem das Luftfahrzeug 10 in einer schematischen und stark vereinfachten Frontalansicht gezeigt ist. Wie zu erkennen ist, weist der auf der Zeichnung rechts befindliche Hybridrotor 14, d.h. der bezogen auf die Flugrichtung backbordseitige Hybridrotor, den Magnus-Rotor 30 und den Querstromrotor 32 auf. Außerdem ist die Leitvorrichtung 34 vorhanden, was jedoch nicht näher dargestellt ist.

In Fig. 5a ist der Hybridrotor 14 mit dem Magnus-Rotor 30 gezeigt, der beispielsweise als Zylinder ausgebildet ist.

Gemäß einem weiteren Aspekt der Erfindung, der jedoch nicht näher gezeigt ist, ist der Magnus-Rotor als Kegelstumpf ausgebildet oder aus unterschiedlichen Kegelstumpf- und/oder Zylindersegmenten zusammengesetzt. Beispielsweise kann der Magnus-Rotor auch andere rotationssymmetrische Formen aufweisen oder Segmente von anderen rotationssymmetrischen Formen aufweisen, z.B. sphärische Formen wie eine Kugel.

Gemäß einem weiteren Ausführungsbeispiel, das in Fig. 5b gezeigt ist, ist der Magnus-Rotor 30 ein Zylinder und weist im Bereich seiner Enden 76 jeweils eine über die Zylinderfläche hinausstehende Endscheibe 78 auf. Beispielsweise sind die Endscheiben 78 an den stirnseitigen Enden des Zylinders ausgebildet und drehen sich mit dem Zylinder.

Gemäß einem weiteren Ausführungsbeispiel, das in Fig. 5c dargestellt ist, weist der Zylinder des Magnus-Rotors 30 eine Vielzahl 80 von Scheiben 82 auf, die zwischen den beiden Endscheiben angeordnet sind, wobei die Scheiben 82 einen größeren Durchmesser aufweisen als die Mantelfläche 36.

Wie in Fig. 5c gezeigt, weisen die Endscheiben 78 und die Scheiben 82 den gleichen Durchmesser auf. Gemäß einem weiteren Ausführungsbeispiel, das jedoch nicht gezeigt ist, weisen die Scheiben 82 einen anderen Durchmesser auf als die Scheiben 78 am Ende, beispielsweise einen geringeren Durchmesser. Darüber hinaus ist außerdem vorgesehen, dass in einem weiteren Ausführungsbeispiel, das ebenfalls nicht gezeigt ist, die Scheiben 82 unterschiedliche Durchmesser aufweisen, beispielsweise zum Rumpfbereich hin kleiner werdend.

Ein weiterer Aspekt ist in Fig. 6 dargestellt. Gemäß einem Ausführungsbeispiel ist das Luftfahrzeug 10 mit einem Hybridrotor 14 ausgebildet, der beispielsweise oberhalb des Rumpfes 12 vorgesehen ist und beidseitig vom Rumpfbereich weg- bzw. übersteht.

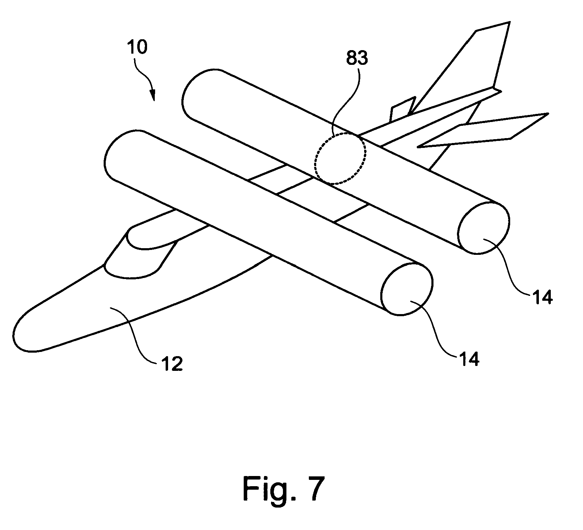

Gemäß einem weiteren Ausführungsbeispiel ist das Luftfahrzeug 10 mit zwei Hybridrotoren 14 ausgebildet, die in Längsrichtung voneinander beabstandet sind. Wie in Fig. 7 schematisch dargestellt, sind zwei jeweils über die Seitenbereiche des Rumpfes 12 deutlich hinausstehende Hybridrotoren 14 angeordnet.

Die gezeigten Hybridrotoren 14 können gemäß einem weiteren Ausführungsbeispiel auch als jeweils zwei direkt nebeneinander angeordnete Hybridrotoren 14 ausgebildet sein, was in Fig. 14 beispielhaft für den hinteren Hybridrotor 14 durch eine Fuge 83 angedeutet ist.

Gemäß einem weiteren Ausführungsbeispiel, das bereits in Fig. 1 dargestellt wurde, sind senkrecht zur Längsachse 28 wenigstens zwei Hybridrotoren 14 vorgesehen, die auf gegenüber liegenden Seiten der Längsachse 28 angeordnet sind, wobei die wenigstens zwei Hybridrotoren voneinander beabstandet sind, beispielsweise durch den dazwischen liegenden Rumpfbereich 12, und ein Antriebspaar bzw. eine Antriebsgruppe 84 bilden.

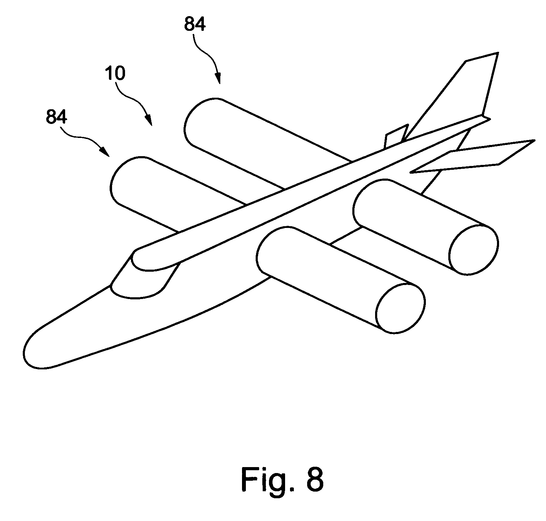

In Fig. 8 ist ein Ausführungsbeispiel gezeigt, bei dem das Luftfahrzeug 10 in Längsrichtung zwei Antriebspaare bzw. Antriebsgruppen 84 aufweist.

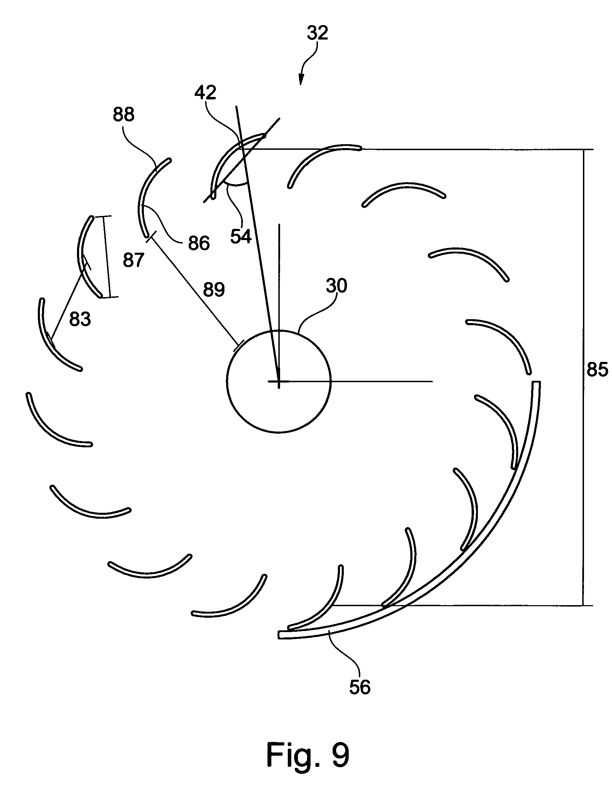

In Fig. 9 ist ein weiteres Ausführungsbeispiel des Querstromrotors 32 gezeigt. In dem gezeigten Ausführungsbeispiel weist der Querstromrotor 32 eine Anzahl von 16 Rotorblättern 42 auf.

Gemäß einem weiteren Ausführungsbeispiel sind mindestens zwei Rotorblätter 42 vorgesehen, was jedoch nicht näher dargestellt ist.

Die Rotorblätter weisen im Querschnitt jeweils eine gebogene Form mit einer konkaven Seite 86 und einer konvexen Seite 88 auf. Wie zu erkennen ist, ist die konkave Seite 86 dem Magnus-Rotor 30 zugewandt.

Gemäß einem weiteren Aspekt der Erfindung ändert sich die Querschnittsform der Rotorblätter im Verlauf ihrer Länge, d.h. über die Breite des Luftfahrzeugs.

Der Magnus-Rotor 30 ist in Fig. 9 nur symbolhaft angedeutet und kann insbesondere in seiner Größe in Relation zu dem Querstromrotor auch anders ausgebildet sein.

Wie bereits im Zusammenhang mit Fig. 3 erläutert, weisen die Rotorblätter im Querschnitt einen Winkel 54 zur Radialrichtung auf. Beispielsweise liegt der Wert für diesen Winkel 54 in einem Bereich von ca. 15° bis 70°.

Wie in Fig. 9 dargestellt, weisen die Rotorblätter jeweils einen Winkel von 30° zur Radialrichtung auf gemäß einem Ausführungsbeispiel.

Gemäß einem Aspekt der Erfindung (nicht näher gezeigt), ist zwischen der Mantelfläche des Magnus-Rotors und den rotierenden Rotorblättern in radialer Richtung ein Abstand vorgesehen, der vom Durchmesser des Magnus-Rotors abhängig ist.

Beispielsweise ist der Durchmesser des Magnus-Rotors genauso groß bis doppelt so groß wie der Abstand der Mantelfläche zu den Rotorblättern.

Gemäß einem weiteren Beispiel beträgt das Verhältnis von Durchmesser des Magnus-Rotors und Abstand zu den Rotorblättern 2 : 1.

Gemäß einem weiteren Aspekt der Erfindung ist ein Abstand 89 in radialer Richtung zwischen den rotierenden Rotorblättern 42 und der Mantelfläche 36 vorgesehen, der das Ein- bis Zweifache einer Profiltiefe 87 eines Rotorblatts 42 beträgt.

Wie bereits erwähnt, beträgt der Abstand gemäß einem weiteren Beispiel, abweichend von Fig. 9, das einfache bis halbe Maß des Durchmessers des Magnus-Rotors.

Gemäß einem weiteren Aspekt der Erfindung weisen die Rotorblätter 42 einen Durchmesser 85 auf, der das Fünf- bis Achtfache der Profiltiefe 87 eines Rotorblatts 42 beträgt.

Gemäß einem weiteren Aspekt der Erfindung ist ein Umfangsabstand 83 der Rotorblätter 42 vorgesehen, der mindestens so groß ist wie die Profiltiefe 87 der Rotorblätter 42.

Die Profiltiefe, der Umfangsabstand sowie die Anzahl der Rotorblätter sind beispielsweise im Prinzip frei wählbar. Daraus ergeben sich dann beispielsweise bei Anwendung des bevorzugten Verhältnisses "Abstand / Durchmesser Magnus-Rotor" der Durchmesser des Magnus-Rotors und der Abstand zwischen den Rotorblättern und der Mantelfläche des Magnus-Rotors.

Wie bereits oberhalb erwähnt, ist beispielsweise vorgesehen, dass die Drehzahl des Magnus-Rotors sowie die Drehrichtung unabhängig von der Drehzahl des Querstromrotors angesteuert bzw. eingestellt werden kann.

Außerdem ist in Fig. 9 das Leitblech 56 schematisch angedeutet, insbesondere hinsichtlich der Dimension bzw. des konstruktiven Aufbaus.

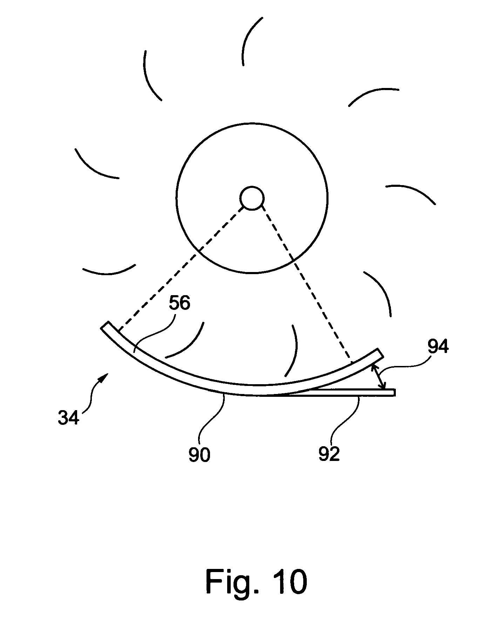

In Fig. 10 ist ein weiteres Ausführungsbeispiel des Hybridrotors gezeigt, bei dem das Gehäusesegment 56 der Leitvorrichtung 34 eine dem Querstromrotor abgewandte Seite 90 aufweist, an der verstellbare Profilelemente 92 vorgesehen sind, mittels derer die Querschnittsform auf der abgewandten Seite 90 veränderbar ist, was durch einen Doppelpfeil 94 symbolhaft angedeutet ist. Es sei darauf hingewiesen, dass die Profilelemente 92 lediglich in dem rechten Bereich gezeigt sind, jedoch auch im linken, d.h., bezogen auf die Flugrichtung unter Anwendung der Strömungslinien aus Fig. 2, vorderen Bereich der Leitvorrichtung 34 ebenfalls vorgesehen sein können. Die Veränderung der Querschnittsform erfolgt beispielsweise in Abhängigkeit der Verschwenkstellung der Leitvorrichtung.

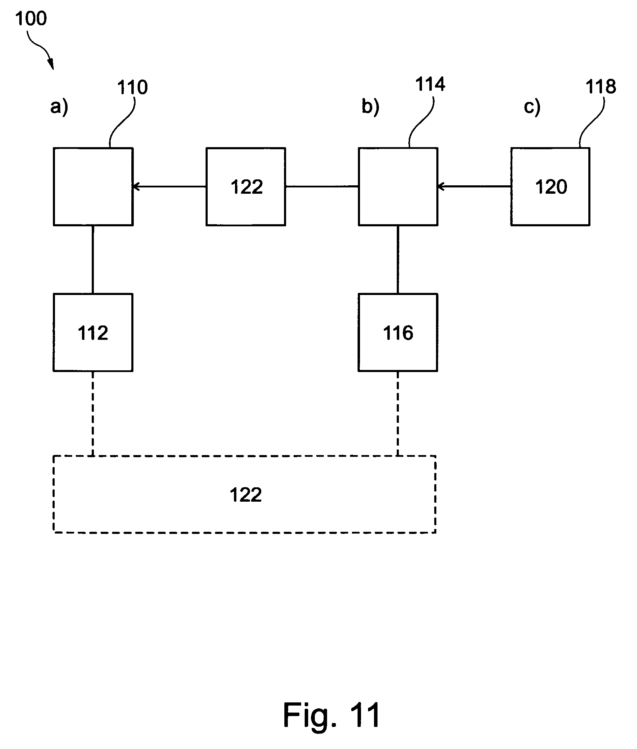

Gemäß der Erfindung ist auch ein Verfahren 100 zum Fliegen eines Luftfahrzeugs vorgesehen, das in Fig. 11 gezeigt ist und folgende Schritte umfasst:
- In einem Schritt a) ist ein Rotieren 110 eines Magnus-Rotors um eine Magnus-Rotorachse vorgesehen, wobei der Magnus-Rotor zur Erzeugung einer Kraft 112 nach dem Magnuseffekt eine geschlossene Mantelfläche aufweist.
- In einem Schritt b) ist ein Rotieren 114 eines Querstromrotors um eine Drehachse vorgesehen, der eine Vielzahl von axial verlaufenden Rotorblättern aufweist, die auf die tangentiale Winkellage bezogen feststehend ausgebildet sind, wobei das Rotieren des Querstromrotors für das Luftfahrzeug eine Vortriebskraft 116 erzeugt, die quer zur Magnus-Rotorachse verläuft. Der Magnus-Rotor ist dabei innerhalb des Querstromrotors angeordnet und die Drehachse verläuft in Richtung der Magnus-Rotorachse.
- In einem Schritt c) ist ein Ausrichten 118 eines Gehäusesegments einer Leitvorrichtung vorgesehen, das den Querstromrotor in Umfangsrichtung teilweise umgibt, wozu ein Verschwenken 120 des Gehäusesegments mit Bezug zur Magnus-Rotorachse derart vorgesehen ist, dass durch den Querstromrotor an dem Magnus-Rotor eine Queranströmung 122 bewirkt wird, mittels der die Kraft 112 nach dem Magnuseffekt erzeugt wird.

Gemäß einem weiteren Aspekt der Erfindung finden die drei Schritte a), b) und c) gleichzeitig statt, bzw. der Schritt c) je nach Bedarf.

Gemäß einem weiteren Aspekt der Erfindung wird durch das Rotieren 110 des Magnus-Rotors eine Auftriebskraft erzeugt. Gemäß einem weiteren Aspekt der Erfindung wird mit dem Rotieren des Magnus-Rotors ebenfalls oder alternativ eine Vortriebskraft erzeugt.

Bezogen auf das Luftfahrzeug werden also zwei Kräfte erzeugt, nämlich die Kraft nach dem Magnuseffekt 112 und die Vortriebskraft 116.

Gemäß einem weiteren Ausführungsbeispiel, was in Fig. 11 durch eine gestrichelte Linien- und Rechteckdarstellung angedeutet ist, wird eine Kraft 122 erzeugt, die einen Auftriebsvektor und einen Vortriebsvektor aufweist.

Gemäß einem weiteren Aspekt der Erfindung, der jedoch in Fig. 11 nicht näher dargestellt ist, sind das Rotieren 110 des Magnus-Rotors und das Rotieren 114 des Querstromrotors sowie das Verschwenken 120 der Leitvorrichtung derart separat regelbar, dass unterschiedliche Antriebs- und Vortriebskräfte einstellbar sind bzw. unterschiedliche Antriebsvektoren- und Vortriebsvektorenanteile.

Gemäß einem weiteren Aspekt sind dadurch unterschiedliche Flugrichtungen einstellbar, wobei insbesondere hervorgehoben werden soll, dass die Leitvorrichtung derart eingestellt werden kann, dass eine vertikale Auftriebs- und Vortriebskraft erzeugt wird, die ein Senkrechtstarten des Luftfahrzeugs ermöglicht bzw. ein Kurzstarten, d.h. ein Starten mit extrem geringer Startstrecke.

Die oberhalb beschriebenen Ausführungsbeispiele können in unterschiedlicher Art und Weise kombiniert werden. Insbesondere können auch Aspekte der Vorrichtungen für Ausführungsformen des Verfahrens sowie Verwendung der Vorrichtungen verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Hybridrotor (14) für ein Luftfahrzeug, mit
- einem Magnus-Rotor (30);
- einem Querstromrotor (32); und
- einer Leitvorrichtung (34);
wobei der Magnus-Rotor durch eine erste Antriebsvorrichtung (20) um eine Magnus-Rotorachse (38) drehend antreibbar ist und eine geschlossenen Mantelfläche (36) aufweist;
wobei der Querstromrotor um eine Drehachse drehend gehalten ist und eine Vielzahl (40) von axial verlaufenden Rotorblättern (42) aufweist, die durch eine zweite Antriebsvorrichtung (22) um die Drehachse drehend antreibbar sind und die auf die tangentiale Winkellage (54) bezogen feststehend ausgebildet sind;
wobei der Magnus-Rotor innerhalb des Querstromrotors angeordnet ist und die Magnus-Rotorachse in Richtung der Drehachse verläuft;
wobei die Leitvorrichtung ein Gehäusesegment (56) aufweist, das den Querstromrotor in Umfangsrichtung teilweise umgibt; **dadurch gekennzeichnet, dass** das Gehäusesegment einen Verstellmechanismus (58) aufweist und wenigstens mit Bezug zur Magnus-Rotorachse verschwenkbar ausgebildet ist;
wobei das Gehäusesegment derart ausrichtbar ist, dass der Querstromrotor eine Vortriebskraft (64) erzeugt und eine Queranströmung (66) an dem Magnus-Rotor derart bewirkt, dass eine Kraft (72) nach dem Magnuseffekt erzeugt wird, die als Auftriebskraft wirkt.

2. Hybridrotor nach Anspruch 1, wobei das Gehäusesegment auf der dem Querstromrotor zugewandten Seite eine Kreisbogenform aufweist.

3. Hybridrotor nach Anspruch 1 oder 2, wobei die Rotorblätter im Querschnitt jeweils eine gebogene Form aufweisen mit einer konkaven (86) und einer konvexen Seite (88); wobei die konkave Seite dem Magnus-Rotor zugewandt ist.

4. Hybridrotor nach Anspruch 1, 2 oder 3, wobei die Rotorblätter im Querschnitt jeweils einen Winkel (54) von 15° bis 70° zur Radialrichtung aufweisen.

5. Hybridrotor nach einem der Ansprüche 1 bis 4, wobei der Magnus-Rotor ein Zylinder ist und im Bereich seiner Enden (76) jeweils eine über die Zylinderfläche hinausstehende Endscheibe (78) aufweist.

6. Hybridrotor nach Anspruch 5, wobei der Zylinder eine Vielzahl (80) von Scheiben (82) aufweist, die zwischen den beiden Endscheiben angeordnet sind; wobei die Scheiben einen größeren Durchmesser aufweisen als die Mantelfläche.

7. Luftfahrzeug (10), aufweisend:
- einen Rumpfbereich (12);
- wenigstens einen Hybridrotor (14) nach einem der vorhergehenden Ansprüche;
wobei der Magnus-Rotor und der Querstromrotor des wenigstens einen Hybridrotors an dem Rumpfbereich gehalten sind;
wobei eine erste Antriebsvorrichtung (20) zum Drehen des Magnus-Rotor (30) des wenigstens einen Hybridrotors (14) und eine zweite Antriebsvorrichtung (22) zum Drehen des Querstromrotors (32) des wenigstens einen Hybridrotors vorgesehen sind;
wobei die Magnus-Rotorachse quer zur Flugrichtung (26) angeordnet ist.

8. Luftfahrzeug nach Anspruch 7, wobei das Luftfahrzeug eine Längsachse (28) aufweist und beidseitig der Längsachse jeweils wenigstens ein Hybridrotor nach einem der Ansprüche 1 bis 6 vorgesehen ist.

9. Luftfahrzeug nach Anspruch 7 oder 8, wobei wenigstens zwei in Längsrichtung beabstandete Hybridrotoren nach einem der Ansprüche 1 bis 6 vorgesehen sind.

10. Verwendung eines Hybridrotors nach einem der Ansprüche 1 bis 6 in einem Luftfahrzeug.

11. Verfahren (100) zum Fliegen eines Luftfahrzeugs, umfassend die folgenden Schritte:
a) Rotieren (110) eines Magnus-Rotor um eine Magnus-Rotorachse; wobei der Magnus-Rotor eine geschlossene Mantelfläche aufweist zur Erzeugung einer Kraft (112) nach dem Magnuseffekt;
b) Rotieren (114) eines Querstromrotors um eine Drehachse, der eine Vielzahl von axial verlaufenden Rotorblättern aufweist, die auf die tangentiale Winkellage bezogen feststehend ausgebildet sind; wobei das Rotieren des Querstromrotors für das Luftfahrzeug eine Vortriebskraft (116) erzeugt, die quer zur Magnus-Rotorachse verläuft; und
wobei der Magnus-Rotor innerhalb des Querstromrotors angeordnet ist und die Drehachse in Richtung der Magnus-Rotorachse verläuft; und
c) Ausrichten (118) eines Gehäusesegments einer Leitvorrichtung, das den Querstromrotor in Umfangsrichtung teilweise umgibt, durch ein Verschwenken (120) des Gehäusesegments mit Bezug zur Magnus-Rotorachse derart, dass durch den Querstromrotor an dem Magnus-Rotor eine Queranströmung (122) bewirkt wird, mittels der die Kraft nach dem Magnuseffekt erzeugt wird.

12. Verfahren nach Anspruch 11, wobei das Rotieren des Magnus-Rotors und das Rotieren des Querstromrotors sowie das Verschwenken der Leitvorrichtung derart separat regelbar sind, dass unterschiedliche Antriebs- und Vortriebskräfte einstellbar sind.

## Claims

1. Hybrid rotor (14) for an aircraft, comprising:
- a Magnus rotor (30);
- a cross-flow rotor (32); and
- a guiding appliance (34);
wherein the Magnus rotor is configured to be drivable to rotate around a Magnus rotor axis (38) by a first propulsion mechanism (20), and has a closed lateral surface (36);
wherein the cross-flow rotor is configured to be kept rotating around an axis of rotation and has a plurality (40) of axially extending rotor blades (42) that are drivable to rotate around the axis of rotation by a second propulsion device (22), and which are configured stationary relative to the tangential angle position (54);
wherein the Magnus rotor is located within the cross-flow rotor and the Magnus rotor axis extends in the direction of the axis of rotation;
wherein the guiding appliance has a housing segment (56) partially surrounding the cross-flow rotor in a circumferential direction;
**characterized in that** the housing segment has an adjustment mechanism (58) and is configured pivotable at least relative to the Magnus rotor axis;
wherein the housing segment can be aligned in such a way that the cross-flow rotor generates a propelling force (64) and brings about a cross-flow (66) onto the Magnus rotor in such a way that a force (72) is generated according to the Magnus effect, which acts as lifting force.

2. Hybrid rotor according to claim 1, wherein the housing segment has a shape of a circular arc on a side facing the cross-flow rotor.

3. Hybrid rotor according to claim 1 or 2, wherein the rotor blades respectively have a curved form in cross-section with a concave (86) and a convex (88) side, and wherein the concave side faces the Magnus rotor.

4. Hybrid rotor according to claim 1,2 or 3, wherein in cross-section, the rotor blades respectively have an angle (54) ranging from 15° to 70° to a radial direction.

5. Hybrid rotor according to one of the claims 1 to 4, wherein the Magnus rotor is a cylinder and in the area of its ends (76), the Magnus rotor respectively has an end plate (78) that extends over the cylinder surface.

6. Hybrid rotor according to claim 5, wherein the cylinder has a plurality (80) of plates (82) located between the two end plates, and wherein the plates have a larger diameter than the lateral surface.

7. Aircraft (10), comprising:
- a fuselage area (12);
- at least one hybrid rotor (14) according to one of the preceding claims;
wherein the Magnus rotor and the cross-flow rotor of the at least one hybrid rotor are attached to the fuselage area;
wherein a first propulsion mechanism (20) is provided to rotate the Magnus rotor (30) of the at least one hybrid rotor (14) and a second propulsion mechanism (22) is provided to rotate the cross-flow rotor (32) of the at least one hybrid rotor;
wherein the Magnus rotor axis is arranged horizontal to the flight direction (26).

8. Aircraft according to claim 7, wherein the aircraft has a longitudinal axis (28) and on both sides of the longitudinal axis respectively at least one of the hybrid rotors according to one of the claims 1 to 6 is provided.

9. Aircraft according to claim 7, wherein at least two hybrid rotors according to one of the claims 1 to 6 are provided at a distance in longitudinal direction.

10. Use of a hybrid rotor according to one of the claims 1 to 6 in an aircraft.

11. Method (100) for flying an aircraft, comprising the following steps:
a) Rotating (110) a Magnus rotor around a Magnus rotor axis, wherein the Magnus rotor axis has a closed lateral surface for generating a force (112) according to the Magnus effect;
b) Rotating (114) a cross-flow rotor around an axis of rotation that has a plurality of axially extending rotor blades that are configured stationary relative to the tangential angle position, wherein the rotating of the cross-flow rotor generates a propelling force (116) for the aircraft that extends across to the Magnus rotor axis, and
wherein the Magnus rotor is located within the cross-flow rotor and the axis of rotation extends in the direction of the Magnus rotor axis; and
c) Aligning (118) a housing segment of a guide mechanism partially surrounding the cross-flow rotor in a circumferential direction by a pivoting (120) of the housing segment relative to the Magnus rotor axis in such a way that the cross-flow rotor brings about a cross-flow (122) onto the Magnus rotor by which the force according to the Magnus effect is generated.

12. Method according to claim 11, wherein the rotating of the Magnus rotor and the rotating of the cross-flow rotor and the deviation of the guide mechanism are controllable separately in such a way that different drive and propelling forces can be adjusted.

## Revendications

1. Rotor hybride (14) pour un aéronef, comportant :
- un rotor à effet Magnus (30) ;
- un rotor à courant transversal (32) ; et
- un moyen de guidage (34) ;
dans lequel le rotor à effet Magnus peut être entraîné en rotation par un premier dispositif d'entraînement (20) autour d'un axe de rotor à effet Magnus (38) et présente une surface d'enveloppe fermée (36) ;
dans lequel le rotor à courant transversal est maintenu en rotation autour d'un axe de rotation et présente une pluralité (40) de pales de rotor (42) s'étendant axialement, qui peuvent être entraînées en rotation par un second dispositif d'entraînement (22) autour de l'axe de rotation et qui sont configurées fixes par rapport à la position angulaire tangentielle (54) ;
dans lequel le rotor à effet Magnus est disposé à l'intérieur du rotor à courant transversal et l'axe de rotor à effet Magnus s'étend dans la direction de l'axe de rotation ;
dans lequel le moyen de guidage présente un segment de boîtier (56) qui entoure partiellement le rotor à courant transversal dans la direction circonférentielle ;
**caractérisé en ce que** le segment de boîtier présente un mécanisme de réglage (58) et est configuré pivotant au moins par rapport à l'axe de rotor à effet Magnus ;
dans lequel le segment de boîtier peut être orienté de telle sorte que le rotor à courant transversal génère une force de propulsion (64) et provoque un écoulement transversal (66) sur le rotor à effet Magnus de telle sorte qu'une force (72) est générée selon l'effet Magnus et agit comme une force de sustentation.

2. Rotor hybride selon la revendication 1, dans lequel le segment de boîtier présente une forme en arc de cercle sur la face tournée vers le rotor à courant transversal.

3. Rotor hybride selon la revendication 1 ou 2, dans lequel les pales de rotor présentent chacune en coupe transversale une forme arquée avec une face concave (86) et une face convexe (88) ; dans lequel la face concave est tournée vers le rotor à effet Magnus.

4. Rotor hybride selon la revendication 1, 2 ou 3, dans lequel les pales de rotor présentent chacune en coupe transversale un angle (54) de 15° à 70° par rapport à la direction radiale.

5. Rotor hybride selon une des revendications 1 à 4, dans lequel le rotor à effet Magnus est un cylindre et présente au niveau de chacune de ses extrémités (76) un fond de capot (78) qui dépasse de la surface du cylindre.

6. Rotor hybride selon la revendication 5, dans lequel le cylindre présente une pluralité (80) de disques (82) qui sont disposés entre les deux fonds de capot ; dans lequel les disques présentent un diamètre supérieur à la surface d'enveloppe.

7. Aéronef (10), présentant :
- une zone de fuselage (12) ;
- au moins un rotor hybride (14) selon une des revendications précédentes ;
dans lequel le rotor à effet Magnus et le rotor à courant transversal de l'au moins un rotor hybride sont maintenus sur la zone de fuselage ;
dans lequel un premier dispositif d'entraînement (20) destiné à faire tourner le rotor à effet Magnus (30) de l'au moins un rotor hybride (14) et un second dispositif d'entraînement (22) destiné à faire tourner le rotor à courant transversal (32) de l'au moins un rotor hybride sont prévus;
dans lequel l'axe de rotor à effet Magnus est disposé transversalement à la direction de vol (26).

8. Aéronef selon la revendication 7, dans lequel l'aéronef présente un axe longitudinal (28) et des deux côtés de l'axe longitudinal est à chaque fois prévu au moins un rotor hybride selon une des revendications 1 à 6.

9. Aéronef selon la revendication 7 ou 8, dans lequel au moins deux rotors hybrides selon une des revendications 1 à 6 sont prévus de manière écartée dans la direction longitudinale.

10. Utilisation d'un rotor hybride selon une des revendications 1 à 6 dans un aéronef.

11. Procédé (100) destiné à faire voler un aéronef, comprenant les étapes suivantes :
a) rotation (110) d'un rotor à effet Magnus autour d'un axe de rotor à effet Magnus ; le rotor à effet Magnus présentant une surface d'enveloppe fermée pour générer une force (112) selon l'effet Magnus ;
b) rotation (114) d'un rotor à courant transversal autour d'un axe de rotation, qui présente une pluralité de pales de rotor s'étendant axialement et qui sont configurées fixes par rapport à la position angulaire tangentielle ; la rotation du rotor à courant transversal générant pour l'aéronef une force de propulsion (116) qui s'étend transversalement à l'axe du rotor à effet Magnus ; et
dans lequel le rotor à effet Magnus est disposé à l'intérieur du rotor à courant transversal et l'axe de rotation s'étend dans la direction de l'axe de rotor à effet Magnus ; et
c) orientation (118) d'un segment de boîtier d'un moyen de guidage qui entoure partiellement le rotor à courant transversal dans la direction circonférentielle, par l'intermédiaire d'un basculement (120) du segment de boîtier par rapport à l'axe de rotor à effet Magnus de telle sorte qu'un écoulement transversal (122) est provoqué par le rotor à courant transversal sur le rotor à effet Magnus, écoulement qui génère la force selon l'effet Magnus.

12. Procédé selon la revendication 11, dans lequel la rotation du rotor à effet Magnus et la rotation du rotor à courant transversal ainsi que le basculement du moyen de guidage peuvent être commandés séparément de manière à pouvoir régler différentes forces d'entraînement et de propulsion.
